# EUROPEAN PATENT SPECIFICATION

(11) **EP 2 901 174 B1**
(45) Date of publication and mention of the grant of the patent: **24.07.2019**
(21) Application number: 13718225.9
(22) Date of filing: 01.03.2013
(51) Int. Cl.: G01S 7/03, G01S 13/34

(54) **FREQUENCY MODULATED CONTINUOUS WAVEFORM (FMCW) RADAR**
FREQUENZMODULIERTES KONTINUIERLICHES WELLENFORMRADAR (FMCW)
RADAR À ONDES ENTRETENUES À MODULATION DE FRÉQUENCE (FMCW)

(30) Priority: 25.09.2012 TR 201210941
(43) Date of publication of application: 05.08.2015
(73) Proprietor: Aselsan Elektronik Sanayi ve Ticaret Anonim Sirketi, 06370 Ankara (TR)
(72) Inventor: HIZAL, Altunkan, Yenimahalle 06370 Ankara (TR); KARTAL, Yusuf Bora, Yenimahalle 06370 Ankara (TR); ERTAN, Ali Erdem, Yenimahalle 06370 Ankara (TR)
(74) Representative: Yamankaradeniz, Kemal
(86) International application number: PCT/IB2013/051638
(87) International publication number: WO 2014/049450

(56) References cited:
- WO-A1-2007/032234
- US-A- 5 757 311
- US-A1- 2003 058 133
- US-A1- 2006 061 505

## Description

### Technical Area

This invention is about an FMCW radar using a single antenna for transmission and receive.

### Prior-art

There are various different techniques used in FMCW radar implementations: In one implementation, an FMCW radar is described with two antennas, one for transmission and one for receive. While the first antenna is transmitting the radar signal, the second antenna can be used to receive the reflected target echo. In this way, the radar can receive the reflected echo during illumination. Sufficient isolation between these two antennas allows the radar to transmit and receive simultaneously.

Another implementation uses a single antenna for transmitting radar signal and receiving target echo simultaneously. In order to reduce the leakage to RF receiving channel, a Reflected Power Canceller (RPC) circuitry is utilized. This circuitry subtracts a magnitude and phase adjusted replica of the transmission signal from the receiving channel. By this way, it is theoretically possible to receive the target echo without any loss. However, in practice, the non-ideal characteristics of RF components and the inability to generate a true out-of-phase replica of a wideband signal, results in losses in the received target echo.

These techniques have various problems: Using two antennas increases the radar's physical size, which in turn increases the weight and cost of the radar. In addition, in order to prevent transmission signal's leakage to receive channel, a high degree of isolation is required between two antennas.

Another known implementation, published in United States of America Patent Office with the number US5861837, describes an FMCW Doppler radar with single antenna, multiple RF frequency and a leakage canceller. The proposed system uses a single antenna with multiple carrier frequencies and operates on classical FMCW radar principals.

US patent document no. US2003058133 discloses a vehicle traffic sensor for detecting and monitoring vehicular targets is presented. The sensor employs a planar design resulting in a reduced profile sensor. The sensor includes a multilayer radio frequency board with RF components on one of the sides and both isolation and planar array antennas on the opposing side. The antennas are preferably tapered planar array antennas which include one transmit antenna and one receive antenna. The sensor also includes at least one logic or signal processing board populated with components on a first side and a ground plane on a second side positioned toward the RF componentry of the RF board to form an RF shield. The boards are housed within a housing that is permeable, at least on the side through which the antenna structures propagate.

Document US 5,757,311 discloses an FMCW radar, wherein a radar return signal is mixed with a delayed frequency sweep signal. Two signal generators are provided, wherein a first signal generator generates a transmission signal and a second signal generator generates a delayed frequency sweep signal that is to be used as a local oscillator.

### Summary of Invention

The purpose of this invention is to allow the use of a single antenna in an FMCW radar. For this purpose, a novel waveform and the proper use of this waveform is described in this invention. The proposed waveform combines advantages of pulsed and FMCW waveforms.

Another purpose of this invention is to design an FMCW radar that uses a single antenna for both transmission and receive and does not have leakage problem.

Another purpose of this invention is to design an FMCW radar that allows the analysis of the signal within short period of time to decrease the computational load of processing before detection.

### Detailed Description of the Invention

The FMCW radar that fulfills the purpose of this invention is shown in the following figures:

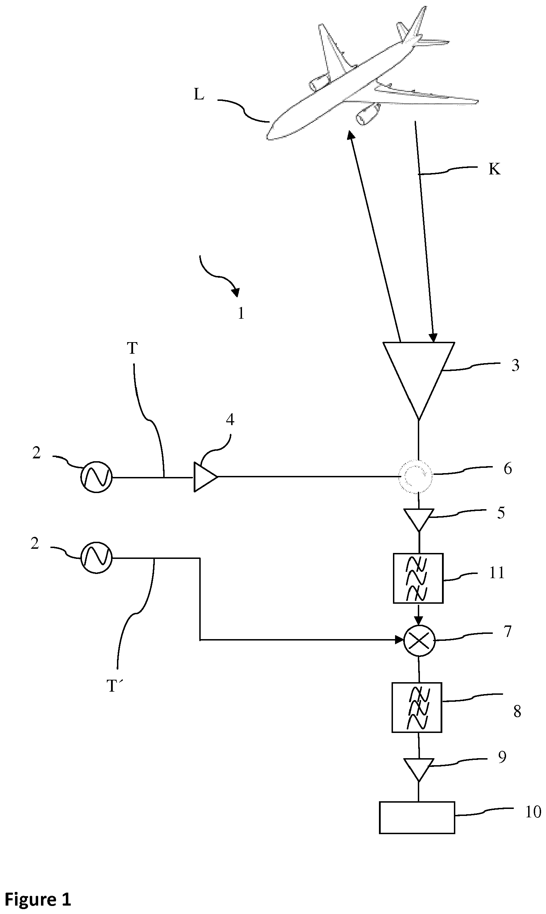

**Figure 1****.** The schematic diagram of the FMCW radar

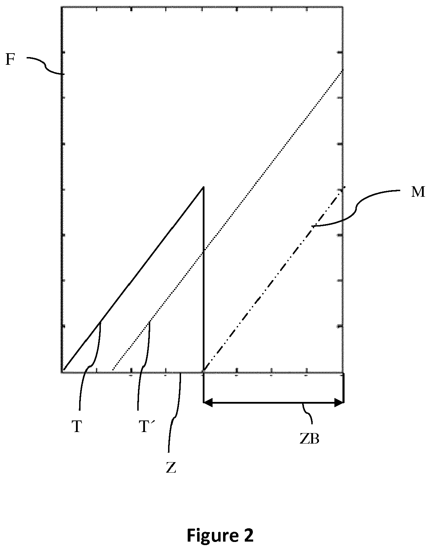

**Figure 2****.** The time-frequency graphs of the signals used for transmission, mixing and target echo return according to an example that is not an embodiment of the present invention

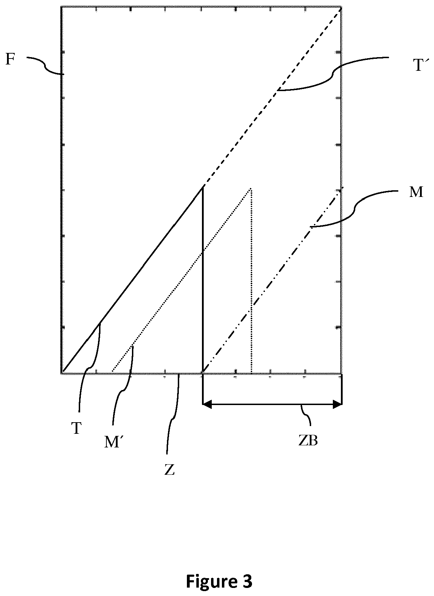

**Figure 3****.** The time-frequency graphs of the signal used for transmission, mixing and target echo return in a radar system with a single signal generator according to an embodiment

The items in the figures are numbered and they correspond to:
1. Radar
2. Signal Generator
3. Antenna
4. Power Amplifier
5. Low Noise Amplifier
6. Circulator
7. Mixer
8. Low Pass Filter
9. Intermediate Frequency Amplifier
10. Analog/Digital Converter
11. Band Pass Filter
T. Transmission Signal
T'. Mixer Local Oscillatior Signal
K. Target Return Echo
L. Target
F. Frequency
Z. Time
ZB. Time duration in which signal analysis is performed
M. Echo return from the target with the farthest detectable range

The subject of this invention is an FMCW radar (1) according to claim 1.

The signal generator (2) in the subject of this invention, the FMCW radar (1), is used to generate the transmission signal (T) whose duration and amount of frequency change in time is selected according to the required range resolution and the required farthest detectable range of the target. The antenna (3) is used to transmit the radar signal and to receive the target echo return (K). At the maximum range the antenna receives the complete target echo return (M) after the radar signal transmission is completed. For ranges less than the maximum range, the receiver uses the part of the echo signal arriving after transmission ceases. In this way the transmission and reception functions are completely isolated, hence only a single antenna is needed.

In an example which does not form an embodiment of the invention, two synchronized and locked signal generators (2) are used. While one of the signal generators generates the radar transmission signal (T), the other generates a signal that is generated after a desired amount of time after radar transmission signal (T) begins. This second signal is also generated with the same frequency change in time with the radar transmission signal (T) and is used for mixing in the receiver.

In an embodiment of the invention, a single signal generator (2) is used. The signal generator generates the radar transmission signal (T) and the signal to be used in mixer (T') at the same time.

After the signal generator (2) completes generation of the radar transmission signal (T), it immediately continues to generate the signal to be used in the mixer (TO with the same frequency change in time. The power amplifier (4) amplifies the radar transmission signal (T) and pass it to the antenna (3).

After the transmission of the radar signal (T) ends, the circulator (6) routes the target echo return signal (K) received by the antenna (3) to the low-noise amplifier (5), which amplifies the return signal and passes the signal to the mixer (7), which multiplies with the signal generated in the signal generator for mixing (T'). The resulting signal is then filtered with a low-pass filter (8), whose cut-off frequency is higher than the highest possible beat frequency of the signal, and whose gap between pass-band cut-off frequency and stop-band cut-off frequency is as small as possible. The filtered signal which is now in the intermediate frequency is then amplified by an intermediate-frequency amplifier (9) and converted to digital representation by an analog-to-digital converter (10). After the conversion, various information about the targets can be extracted from the digital signal.

Another preferred embodiment of the invention about the FMCW radar (1) is the use of a band-pass filter (11) between low-noise amplifier (5) and the mixer (7) to eliminate the unwanted signals outside the frequency band of interest.

Another preferred embodiment of the invention about the FMCW radar (1) is the use of a band-pass filter (11) between the circulator (6) and the low-noise amplifier (5) before the mixer (7) to eliminate the unwanted signals outside the frequency band of interest.

As only the part of the target echo return signal (K) received after the completion of transmission of radar signal (T) is used in the receiver, it is sufficient to use a single antenna (3), and there is no need for two antennas in this system.

As the duration of the radar transmission signal (T) is selected according to the required farthest detectable range of the target, and as long pulse waveforms can also be used, low-power power amplifiers (4) can be used in the system. This reduces the energy consumption and allows use of simple cooling solutions. In addition, use of low instantaneous power also makes the FMCW radar (1) harder to be detected by an electronic warfare system. For this reason, the low-probability of intercept (LPI) feature of the FMCW radar (1) is preserved.

The subject of this invention, the FMCW radar, analyzes a shorter duration of received signal compared to prior-art, and therefore, has less computational load in the signal processing. This results in less resource requirements in either central processing units (CPU) or field programmable gate arrays (FPGA) used to implement signal processing compared to prior-art.

## Claims

1. An FMCW radar (1)
- **comprises** at least one power amplifier (4) to amplify a transmission radar signal (T),
- at least one low-noise amplifier (5),
- a single antenna (3) that is used for radar signal transmission and for receiving target echo signals,
- at least one circulator (6) for routing the signal received by the antenna (3) to the low-noise amplifier (5),
- at least one low-pass filter (8) for filtering the output signal of a mixer (7),
- at least one intermediate frequency amplifier (9) to amplify the output signal of the low-pass filter (8),
- at least one analog-to-digital converter (10) that converts the output signal of the intermediate frequency amplifier (9) to digital domain, and
- **is characterized by**
- a signal generator (2) that generates two linear frequency modulated signals, one as the radar transmission signal (T) and the other (T') to be used for mixing with the output of the low-noise amplifier (5), wherein, after generating the radar transmission signal (T), the signal generator immediately continues to generate the signal (T') to be used in the mixer by keeping the gradient of the change in frequency over time constant over the complete signal generation process of generating the radar transmission signal (T) and the signal (T') to be used in the mixer,
- wherein the mixer (7) is adapted for multiplying the mixing signal (T'), which has the same frequency change over time as the radar transmission signal (T), with the output of the low-noise amplifier (5) wherein the output of the low-noise amplifier (5) contains the part of the amplified target echo return signal which is received after the radar transmission ceases.

2. A Frequency Modulated Continuous Wave (FMCW) radar (1) as in Claim 1 wherein the duration of the generated radar transmission signal (T) is equal to or larger than the ratio between twice the required farthest detectable range of the target and the speed of light.

3. A Frequency Modulated Continuous Wave (FMCW) radar (1) as in Claim 1 wherein the low-pass filter (8) has a cut-off frequency which is higher than the highest possible beat frequency of the signal and a gap between pass- band and stop-band which is as small as possible.

4. A Frequency Modulated Continuous Wave (FMCW) radar (1) as in Claim 1 wherein a band-pass filter (11) is provided between the low-noise amplifier (5) and the mixer (7).

## Patentansprüche

1. FMCW-Radar (1)
- **umfassend** mindestens einen Leistungsverstärker (4) zum Verstärken eines Übertragungsradarsignals (T),
- mindestens einen rauscharmen Verstärker (5),
- eine Einzelantenne (3), die zur Radarsignalübertragung und zum Empfangen von Zielechosignalen verwendet wird;
- mindestens einen Zirkulator (6) zum Weiterleiten des von der Antenne (3) empfangenen Signals an den rauscharmen Verstärker (5),
- mindestens einen Tiefpassfilter (8) zum Filtern des Ausgangssignals eines Mischers (7),
- mindestens einen Zwischenfrequenzverstärker (9) zum Verstärken des Ausgangssignals des Tiefpassfilters (8),
- mindestens einen Analog-Digital-Wandler (10), der das Ausgangssignal des Zwischenfrequenzverstärkers (9) in den digitalen Bereich konvertiert, und
- **gekennzeichnet durch**
- einen Signalgenerator (2), der zwei linearfrequenzmodulierte Signale generiert, eines als Radarübertragungssignal (T) und das andere (T') zur Verwendung zum Mischen mit dem Ausgang des rauscharmen Verstärkers (5), wobei, nach dem Generieren des Radarübertragungssignals (T) der Signalgenerator unverzüglich fortfährt, das Signal (T') zur Verwendung im Mischer zu generieren, indem er über den gesamten Signalgenerierungsprozess des Generierens des Radarübertragungssignals (T) und des im Mischer zu verwendenden Signals (T') den Änderungsgradienten in der Frequenz im Zeitverlauf konstant hält,
- wobei der Mischer (7) angepasst ist, um das Mischsignal (T'), das dieselbe Frequenzänderung im Zeitverlauf aufweist wie das Radarübertragungssignal (T), mit dem Ausgang des rauscharmen Verstärkers (5) zu multiplizieren, wobei der Ausgang des rauscharmen Verstärkers (5) den Teil des verstärkten Zielechoantwortsignals enthält, der nach Beenden der Radarübertragung empfangen wird.

2. Frequenzmoduliertes kontinuierliches Wellenform-(Frequency Modulated Continuous Wave, (FMCW))-Radar (1) nach Anspruch 1, wobei die Dauer des generierten Radarübertragungssignals (T) gleich oder größer als das Verhältnis zwischen dem Zweifachen des erforderlichen entferntesten detektierbaren Bereichs des Ziels und der Lichtgeschwindigkeit ist.

3. Frequenzmoduliertes kontinuierliches Wellenform-(Frequency Modulated Continuous Wave, (FMCW))-Radar (1) nach Anspruch 1, wobei der Tiefpassfilter (8) eine Grenzfrequenz, die höher als die höchstmögliche Schwebungsfrequenz des Signals ist, und eine Lücke zwischen dem Durchlassbereich und dem Sperrbereich aufweist, die so klein wie möglich ist.

4. Frequenzmoduliertes kontinuierliches Wellenform-(Frequency Modulated Continuous Wave, (FMCW))-Radar (1) nach Anspruch 1, wobei ein Bandpassfilter (11) zwischen dem rauscharmen Verstärker (5) und dem Mischer (7) bereitgestellt ist.

## Revendications

1. Radar à onde entretenues à modulation de fréquence (FMCW) (1)
- comprenant au moins un amplificateur de puissance (4) pour amplifier un signal radar d'émission (T),
- au moins un amplificateur à faible bruit (5),
- une seule antenne (3) utilisée pour l'émission de signal radar et pour la réception de signaux d'écho cibles,
- au moins un circulateur (6) destiné à acheminer le signal reçu par l'antenne (3) vers l'amplificateur à faible bruit (5),
- au moins un filtre passe-bas (8) destiné à filtrer le signal de sortie d'un mélangeur (7),
- au moins un amplificateur de fréquence intermédiaire (9) pour amplifier le signal de sortie du filtre passe-bas (8),
- au moins un convertisseur analogique-numérique (10) qui convertit le signal de sortie de l'amplificateur de fréquence intermédiaire (9) en domaine numérique, et
- **est caractérisé par**
- un générateur de signal (2) qui génère deux signaux modulés en fréquence linéaire, l'un en tant que signal d'émission radar (T) et l'autre (T') à utiliser pour le mélange avec la sortie de l'amplificateur à faible bruit (5), après la génération du signal d'émission radar (T), le générateur de signal continue immédiatement à générer le signal (T') à utiliser dans le mélangeur en maintenant constant le gradient du changement de fréquence dans le temps pendant le processus complet de génération de signal de génération du signal d'émission radar (T) et du signal (T') à utiliser dans le mélangeur,
- ledit mélangeur (7) étant adapté pour multiplier le signal de mélange (T'), qui possède la même variation de fréquence dans le temps que le signal d'émission radar (T), avec la sortie de l'amplificateur à faible bruit (5), ladite sortie de l'amplificateur à faible bruit (5) contenant la partie du signal de retour écho cible amplifié qui est reçue après que l'émission radar cesse.

2. Radar à onde entretenues à modulation de fréquence (FMCW) (1) selon la revendication 1, ladite durée du signal d'émission radar généré (T) étant supérieure ou égale au rapport entre le double de la plage détectable la plus éloignée requise de la cible et la vitesse de la lumière.

3. Radar à onde entretenues à modulation de fréquence (FMCW) (1) selon la revendication 1, ledit filtre passe-bas (8) possédant une fréquence de coupure supérieure à la fréquence de battement la plus élevée possible du signal et un intervalle entre bande passante et bande d'arrêt qui est aussi petit que possible.

4. Radar à onde entretenues à modulation de fréquence (FMCW) (1) selon la revendication 1, un filtre passe-bande (11) étant disposé entre l'amplificateur à faible bruit (5) et le mélangeur (7).
